# EUROPEAN PATENT APPLICATION

(11) **EP 4 354 292 A1**
(43) Date of publication of application: **17.04.2024**
(21) Application number: 22824126.1
(22) Date of filing: 10.06.2022
(51) Int. Cl.: G06F 9/50

(54) **RESOURCE CONFIGURATION METHOD AND APPARATUS, AND STORAGE MEDIUM AND COMPUTING SYSTEM**

(30) Priority: 18.06.2021 CN 202110678362
(71) Applicant: Huawei Technologies Co., Ltd., Longgang Shenzhen, Guangdong 518129 (CN)
(72) Inventor: SUN, Lingchuan, Shenzhen, Guangdong 518129 (CN); YUE, Fujun, Shenzhen, Guangdong 518129 (CN); WANG, Yibin, Shenzhen, Guangdong 518129 (CN)
(74) Representative: Huawei European IPR
(86) International application number: PCT/CN2022/098024
(87) International publication number: WO 2022/262646

(57) **Abstract**

Embodiments of this application disclose a resource configuration method, an apparatus, a storage medium, and a computing system, and pertain to the field of computer technologies. The method is applied to a computing cluster. The computing cluster includes a plurality of computing nodes. The method includes: obtaining an execution characteristic parameter of an application; obtaining, based on the execution characteristic parameter of the application and a load model, running time periods of the application when the application runs on different computing nodes, where the different computing nodes have different configurations; and determining, according to a preset policy, a configuration of a computing node that executes the application. According to this application, accuracy of resource configuration can be improved.

## Description

This application claims priority to Chinese Patent Application No. 202110678362.6 on June 18, 2021, entitled "RESOURCE CONFIGURATION METHOD, APPARATUS, STORAGE MEDIUM, AND COMPUTING SYSTEM", which is incorporated herein by reference in its entirety.

### TECHNICAL FIELD

This application relates to the field of computer technologies, and in particular, to a resource configuration method, an apparatus, a storage medium, and a computing system.

### BACKGROUND

In the big data era, a demand for computing power is increasing explosively, and computing clusters with high computing power, such as data centers, supercomputing centers, and cloud platforms, are developing rapidly. A computing cluster usually includes a large quantity of computing nodes (which may be physical machines or virtual machines), and is configured to execute a large task, for example, training of a deep learning network model or weather forecast, and the task is usually referred to as an application. A user (a specific organization or individual) who has a demand for application execution may send an application to the computing cluster for execution.

The user needs to pay a specific fee to an operator of the computing cluster, to rent some device resources in the computing cluster, for example, rent a specific quantity of computing nodes to execute the application. The user may determine, based on suggestions of the operator or experience of the user, a quantity of device resources to be rented, and then rent corresponding device resources.

In a process of implementing this application, the inventor finds that the related technology has at least the following problems:

The foregoing quantity of resources is determined based on experience of the user or the operator. The corresponding device resources may be insufficient to meet an application execution requirement. To be specific, an execution duration (or referred to as a running time period) of executing a corresponding application based on the device resources is excessively long. Alternatively, the device resources may exceed an actual application execution requirement, to be specific, there are excessive device resources, and the excessive device resources do not help increase the application execution duration. Overall, accuracy of resource configuration for an application is low.

### SUMMARY

Embodiments of this application provide a resource configuration method, an apparatus, a storage medium, and a computing system, so that a problem of low accuracy of resource configuration for an application can be resolved. The technical solutions are as follows.

According to a first aspect, a resource configuration method is provided. The method is applied to a computing cluster, the computing cluster includes a plurality of computing nodes, and the method includes: obtaining an execution characteristic parameter of an application; obtaining, based on the execution characteristic parameter of the application and a load model, running time periods of the application when the application runs on different computing nodes, where the different computing nodes have different configurations; and determining, according to a preset policy, a configuration of a computing node that executes the application.

The running time period of the application can be accurately predicted based on a machine learning model, and resource configuration is performed based on the predicted running time period, so that accuracy of the resource configuration can be improved.

The execution characteristic parameter is an expected value corresponding to a target execution characteristic parameter type. The configuration of the computing node is an expected value corresponding to a target resource parameter type. The target resource parameter type and the target execution characteristic parameter type are model input parameter types of the load model. The target resource parameter type may be one or more specified resource parameter types in a plurality of resource parameter types. The target execution characteristic parameter type may be one or more specified execution characteristic parameter types in a plurality of execution characteristic parameter types. The target resource parameter type, the target execution characteristic parameter type, and corresponding expected values may be specified by a user, or may be specified by an operator of the computing cluster, or may be specified by a resource configuration service provider. The computing node that executes the application may be one or more nodes. The predicted running time period may also be a running time period of the application when the application runs on the one or more computing nodes.

The preset policy may include a shortest duration, a lowest cost, a lowest cost when a duration is lower than a threshold, highest cost-effectiveness, or the like. The preset policy may be specified by the user, or may be specified by the resource configuration service provider.

The foregoing method may be performed before the application is executed, or may be performed in a process of executing the application. The expected value of the target resource parameter type and the expected value of the target execution characteristic parameter type may form one or more possible expected value combinations. The expected value combinations may be separately input into the load model, to obtain predicted execution durations of the application with the expected value combinations respectively. Subsequently, based on a predicted execution duration corresponding to each expected value combination, an optimal value corresponding to the target resource parameter type that meets the preset policy is selected as the configuration of the computing node that executes the application.

In a possible implementation, before the obtaining running time periods of the application when the application runs on different computing nodes, a configuration of a sample computing node and an execution characteristic parameter of a sample application are obtained. Actual running time periods of the sample application executed with different values of sample space are obtained. The load model is established based on each value of the sample space and a corresponding actual execution duration.

The sample space is combinations of different values of the execution characteristic parameter of the sample application and different values of the configuration of the sample computing node. The foregoing application and the sample application herein may be considered as different examples of a same application. The actual running time periods of the sample application executed with the different values of the sample space are sample data used in a process of training the load model. The load model may be a machine learning model, and may be specifically a deep learning network model or may be a regression model.

When the sample data is obtained, the actual running time periods of the sample application executed with the different values of the sample space may be obtained in a trial running manner. In this way, accuracy of model training can be improved. Alternatively, the actual running time periods of the sample application executed with the different values of the sample space may be obtained from historical running data of the application. In this way, efficiency of sample obtaining can be improved. Then, the model training is performed based on each value of the sample space and the corresponding actual execution duration, to obtain the load model.

In a possible implementation, the sample space includes a plurality of sample subspaces with an equal quantity of values, and actual execution durations corresponding to the values in each sample subspace belong to a same unit duration interval. The load model is established based on each value of all the sample subspaces and the corresponding actual execution duration.

The foregoing processing may be used when a quantity of samples is small, or the foregoing processing may be used in a case of any quantity of samples. According to the foregoing processing, inaccurate model training caused by uneven sample distribution can be prevented, and accuracy of a model can be improved.

In a possible implementation, the resource configuration apparatus determines a training sample and a test sample based on each value of the sample space and the corresponding actual execution duration, and trains a plurality of to-be-selected models separately based on the training sample, to obtain a plurality of trained to-be-selected models. For each trained to-be-selected model, values of a target resource parameter type and a target execution characteristic parameter type in each test sample are separately input into the trained to-be-selected model, to obtain a predicted execution duration corresponding to each test sample. Based on an actual execution duration and the predicted execution duration that correspond to each test sample, prediction accuracy of the trained to-be-selected model is determined, and a trained to-be-selected model corresponding to highest prediction accuracy is determined as the load model.

According to the foregoing processing, an algorithm model most suitable for a current application may be selected from different algorithm models as the load model, and therefore, accuracy of predicting an execution duration of the application by the load model can be improved.

In a possible implementation, when a standard deviation of the obtained actual execution durations is greater than a standard deviation threshold, a duration logarithm corresponding to each actual execution duration is determined. The load model is established based on each value of the sample space and the corresponding duration logarithm.

When a span of the actual execution duration is large, in the foregoing manner, a numerical span of model output can be effectively reduced, model processing complexity can be reduced, and model processing efficiency can be improved.

In a possible implementation, the execution characteristic parameter of the sample application includes at least one of a data scale, a quantity of iterations, and a degree of parallelism.

The execution characteristic parameter may be set based on a characteristic of the application, and various execution characteristic parameters may be set as input of the load model. In this way, the load model has strong applicability.

In a possible implementation, a configuration of a computing node with a shortest running time period in the running time periods of the application when the application runs on the different computing nodes is used as the configuration of the computing node that executes the application.

Predicted execution durations of the application with different expected values of the target resource parameter type are obtained, and an expected value corresponding to a shortest predicted execution duration is determined as a recommended value corresponding to the target resource parameter type. If there are a plurality of expected values corresponding to the shortest predicted execution duration, an expected value corresponding to a lowest cost price is selected from the plurality of expected values as the recommended value. In this case, it indicates that after a quantity of resources is increased to a specific value, a processing speed of the application cannot be improved by continuing to increase the quantity of resources.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner.

In this way, it can be ensured that an execution speed of the application is highest, and execution efficiency of the application can be improved.

In a possible implementation, a set of configurations of computing nodes with a running time period less than a first duration threshold in the running time periods of the application when the application runs on the different computing nodes is obtained. A cost price of a configuration of each computing node in the set is obtained. A configuration of a computing node with a lowest cost price in the set is used as the configuration of the computing node that executes the application.

Predicted execution durations of the application with different expected values of the target resource parameter type are obtained, and an expected value corresponding to a lowest cost price is selected, from expected values corresponding to predicted execution durations each less than a duration threshold, as a recommended value corresponding to the target resource parameter type. The duration threshold may be set based on experience.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner.

In this way, it can be ensured that the cost price is lowest when the running time period of the application is less than a specific threshold.

In a possible implementation, cost prices of configurations of the different computing nodes are obtained. In the running time periods of the application when the application runs on the different computing nodes, a configuration of a computing node with a cost price less than a first price and with a shortest running time period is used as the configuration of the computing node that executes the application.

Cost prices and predicted execution durations that correspond to different expected values of the target resource parameter type are obtained, and expected values corresponding to cost prices each less than a price threshold are selected from the expected values. Then, an expected value corresponding to a shortest predicted execution duration is selected from the selected expected values as a recommended value corresponding to the target resource parameter type.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner.

In this way, it can be ensured that the running time period of the application is shortest when the cost price is lower than a specific threshold.

In a possible implementation, the configuration of the computing node includes at least one of a quantity of nodes, a quantity of CPU cores of the node, a memory of the node, a bandwidth of the node, and a disk capacity of the node.

There are a plurality of possible configuration options for the computing node, and various configuration parameter types may be set as input of the load model. In this way, the load model has strong applicability.

In a possible implementation, the computing cluster includes at least one device, and the computing node is one device. The computing node is a physical machine, so that corresponding resource management is simpler and faster.

In a possible implementation, the computing cluster includes at least one device, at least one virtual machine runs on each device, and the computing node is one virtual machine. The computing node is a virtual machine, so that a resource configuration can be more flexible.

According to a second aspect, a resource configuration apparatus is provided. The apparatus includes one or more modules, and the one or more modules are configured to implement the method according to the first aspect and the possible implementations of the first aspect.

According to a third aspect, a computer device is provided. The computer device includes a memory and a processor, and the memory is configured to store computer instructions. The processor executes the computer instructions stored in the memory, to enable the computer device to perform the method according to the first aspect and the possible implementations of the first aspect.

According to a fourth aspect, a computer-readable storage medium is provided. The computer-readable storage medium stores computer program code. When the computer program code is executed by a computer device, the computer device performs the method according to the first aspect and the possible implementations of the first aspect.

According to a fifth aspect, a computer program product is provided. The computer program product includes computer program code. When the computer program code is executed by a computer device, the computer device performs the method according to the first aspect and the possible implementations of the first aspect.

According to a sixth aspect, a computing system is provided. The computing system includes a plurality of computing nodes and a resource configuration apparatus. The plurality of computing nodes have different configurations, and the resource configuration apparatus is configured to perform the method according to the first aspect and the possible implementations of the first aspect.

Beneficial effects brought by the technical solutions provided in embodiments of this application are as follows.

In embodiments of this application, a load model that uses a configuration of a computing node and an execution characteristic parameter of an application as input parameters is established, so that an execution duration of the application is predicted based on the load model, and therefore, a resource configuration is determined based on the predicted execution duration. The execution duration of the application can be accurately predicted based on a machine learning model, and the resource configuration is performed based on the execution duration, so that accuracy of the resource configuration can be improved.

### BRIEF DESCRIPTION OF DRAWINGS

FIG. 1 is a schematic diagram of a system architecture according to an embodiment of this application;
FIG. 2 is a flowchart of a method for establishing a load model according to an embodiment of this application;
FIG. 3 is a schematic diagram of a user configuration file according to an embodiment of this application;
FIG. 4 is a flowchart of a method for establishing a load model according to an embodiment of this application;
FIG. 5 is a flowchart of a sample standardization processing method according to an embodiment of this application;
FIG. 6 is a flowchart of a resource configuration method according to an embodiment of this application; and
FIG. 7 is a schematic diagram of a structure of a resource configuration apparatus according to an embodiment of this application.

### DESCRIPTION OF EMBODIMENTS

An embodiment of this application provides a resource configuration method. The method may be performed by a resource configuration apparatus. The apparatus may be a terminal or a server of a user who has an application execution requirement, or may be a computing node in a computing cluster configured to execute an application for the user, or may be a third-party server configured to predict an application execution duration (or referred to as a running time period) and recommend a resource configuration solution, or the like. The computing cluster herein may be a data center, a supercomputing center, a cloud platform, or the like.

### Application scenario description:

A user has some large-scale processing tasks (which are referred to as applications). Because the user does not have a device or a device group with sufficiently powerful computing power, the user usually considers leasing a specific device resource from an operator of a computing cluster to execute a corresponding application. This type of user may be an enterprise, a research organization, or the like. The application may be training of a deep learning network model, big data analysis, or the like. Usually, the user needs to repeatedly execute the application for a plurality of times. For example, a weather station may execute a weather forecast application every unit time (for example, half an hour).

In this case, the user may select the device resource that the user needs to rent from the operator of the computing cluster based on comprehensive consideration of an application status, a running requirement, and a cost budget status. Usually, the user needs to determine a quantity of nodes to be rented, a quantity of CPU cores of the node, a memory capacity of the node, a bandwidth of the node, a disk capacity of the node, and the like. Different device resources that are used may affect an execution duration of the application. In addition, for a same application, the user may alternatively set different values for an execution characteristic parameter of the application. For example, a quantity of training times of a training application may be manually set. The different values of the execution characteristic parameter of the application may also affect the execution duration of the application.

In this case, a requirement of the user is that execution durations of the application with different resource configurations and execution characteristic parameters can be predicted before the device resource is rented from the operator of the computing cluster. Further, some optimal resource configurations may be recommended to the user according to a specific policy.

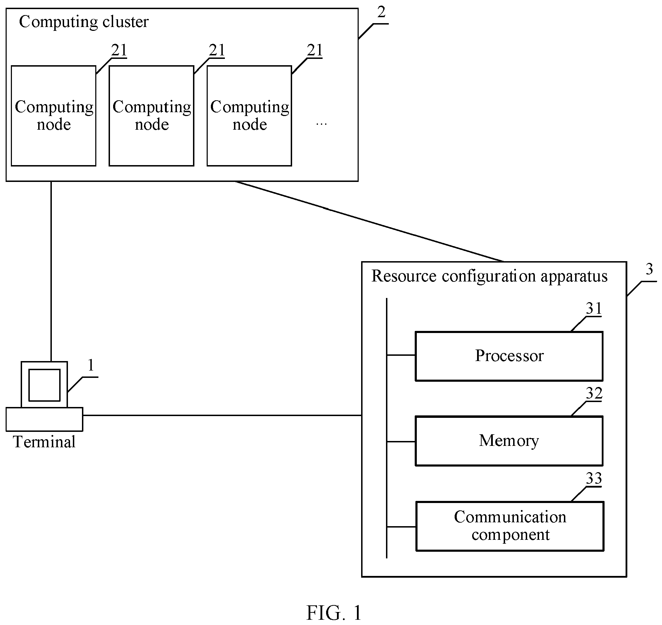

The resource configuration method provided in this solution can meet the foregoing requirement of the user. As shown in FIG. 1, a corresponding system includes a terminal 1, a computing cluster 2, and a resource configuration apparatus 3.

A client program is installed on the terminal 1. The client program may provide functions of predicting an application execution duration and recommending a resource configuration solution, and collaborate with the resource configuration apparatus 3 to implement the foregoing functions.

The computing cluster 2 may include a plurality of physical machines. Each physical machine may be one computing node 21, or a plurality of virtual machines run on each physical machine and each virtual machine is one computing node 21.

The resource configuration apparatus 3 may include a processor 31, a memory 32, a communication component 33, and the like.

The processor 31 is configured to provide the user with the resource configuration method that meets the user requirement. The processor 31 may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like.

The memory 32 may be configured to store pre-stored data, intermediate data, and result data in a process of sample collection, modeling, and prediction. The memory 32 may include a read-only memory and a random access memory, or may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication component 33 may be a wired network connector, a wireless fidelity (wireless fidelity, Wi-Fi) module, a Bluetooth module, a cellular network communication module, or the like. The communication component 33 may be configured to perform data transmission with another device, such as a terminal or a server.

The resource configuration apparatus 3 may be an independent device, or may be a hardware component on a specific computer device, or may be a set of software apparatuses running on a computer device. In this case, the processor 31, the memory 32, and the communication component 33 may be a processor, a memory, and a communication component that are of a hardware apparatus in which the resource configuration apparatus 3 is located. For ease of description, in embodiments, the processor of the hardware apparatus in which the resource configuration apparatus 3 is located is also referred to as the processor 31 of the resource configuration apparatus. The memory of the hardware apparatus in which the resource configuration apparatus is located is also referred to as the memory 32 of the resource configuration apparatus. The communication component of the hardware apparatus in which the resource configuration apparatus is located is also referred to as the communication component 33 of the resource configuration apparatus. Correspondingly, the foregoing processor 31, the memory 32, the communication component 33, and the like may be respectively deployed in different systems or hardware apparatuses.

### Description of some concepts involved in the solution:

### (1) Computing cluster

A computing cluster is a computing cluster such as a data center, a supercomputing center, or a cloud platform that is built for a large-scale processing task and that has a powerful processing capability. The computing cluster may include at least one device (that is, a physical machine). Each device may be used as a computing node, or at least one virtual machine runs on each device and each virtual machine may be used as a computing node. Usually, on the cloud platform, the computing node is a virtual machine, and in the data center and the supercomputing center, the computing node is a physical machine.

### (2) Application

An application refers to a large-scale processing task. In addition, the application involved in embodiments of this application is usually an application, for example, weather forecast that needs to be repeatedly executed. This type of application needs to be repeatedly executed for a plurality of times every day, and each execution may take several seconds, several minutes, or even several hours.

### (3) Resource parameter type

A resource parameter type is a parameter type indicating a quantity of device resources, and may interpret a configuration of a computing node. A parameter value corresponding to the resource parameter type has an impact on an execution duration of an application. The resource parameter type may include a quantity of nodes, a quantity of CPU cores of the node, a memory capacity of the node, a bandwidth of the node, a disk capacity of the node, and the like.

A target resource parameter type is a resource parameter type that is specified by a user and that is used as model input, and is a parameter type to which the user considers that special attention needs to be paid, when the execution duration of the application is predicted. For example, in a process of configuring a resource for a specific application, an operator of a computing cluster has recommended, to the user, related attribute information and rents that are of different types of nodes. The user pre-selects one of the types of nodes based on the information. Subsequently, when an application execution duration is predicted using a machine learning model, attention only needs to be paid to an impact of the quantity of nodes on the prediction of the execution duration. Therefore, the quantity of nodes may be specified as the model input, and in other words, the quantity of nodes is set as the target resource parameter type.

The user may select one or more target resource parameter types from a plurality of optional resource parameter types as the model input. For example, the user specifies the quantity of nodes as the target resource parameter type, or the user specifies the quantity of nodes and the quantity of CPU cores of the node as target resource parameter types.

### (4) Execution characteristic parameter type

The execution characteristic parameter type is a parameter type used for describing an execution characteristic of an application, and has an impact on an execution duration of the application. Different applications may involve different types of execution characteristic parameters, usually including a data scale, a quantity of iterations, a degree of parallelism, and the like. For example, for an application that performs data search, the data scale is an important execution characteristic parameter type, and indicates a size of a data set that is searched for. For another example, for an application that performs model training, the quantity of iterations is an important execution characteristic parameter type, and indicates a quantity of training times, and so on.

A target execution characteristic parameter type is an execution characteristic parameter type that is specified by a user and that is used as model input. The user may select the target execution characteristic parameter type from a plurality of execution characteristic parameter types based on a to-be-executed application. For example, the user specifies the quantity of iterations as the model input.

### (5) Expected value

An expected value is a specified parameter value of a model input parameter type, and usually may be specified by a user. The user is more concerned about an execution duration of an application with this expected value. The user may set one or more expected values for each model input parameter type. The expected value is input into a model after modeling is completed. The expected values corresponding to each model input parameter type may be combined together to obtain an expected value combination. The expected value combination is input into the model, so that the model can predict an execution duration of the application with the expected value combination.

In a procedure of the resource configuration method provided in embodiments of this application, the user may first establish a load model based on trial running of the application or historical execution data of the application, then predict a running time period of the current application based on the load model, and recommend a resource configuration solution based on the running time period. Therefore, the resource configuration method provided in embodiments of this application may be divided into three processes, specifically including a modeling process, a processing process of running time period prediction, and a processing process of resource configuration solution recommendation. The following separately describes the three processes in detail.

### Description of the modeling process:

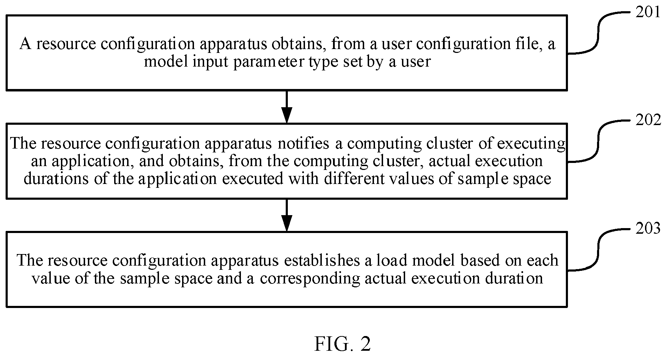

In embodiments of this application, an application running time period is predicted based on a machine learning model, and resource configuration processing is performed accordingly. As shown in FIG. 2, a modeling processing process provided in embodiments of this application includes the following processing steps. Modeling processing is performed by the resource configuration apparatus in FIG. 1.

201: The resource configuration apparatus obtains, from a user configuration file, a model input parameter type set by a user.

Model input parameter types may include a target resource parameter type (for example, a quantity of nodes) and a target execution characteristic parameter type (for example, a quantity of iterations). The resource configuration apparatus used as an execution body is a third-party device configured to predict an application execution duration and recommend a resource configuration solution. A processing manner of another possible execution body is similar to that of the resource configuration apparatus. Details are not described in embodiments of this application.

The user installs, on a terminal of the user, a client program provided in embodiments of this application, and stores the user configuration file in a specified directory of the client program. Content such as a model input parameter type is not filled in the user configuration file in an initial state. The user may open the user configuration file, edit the user configuration file, enter the target resource parameter type and the target execution characteristic parameter type as the model input parameter types, and may further enter expected values of these model input parameter types. A plurality of groups of expected values may be entered.

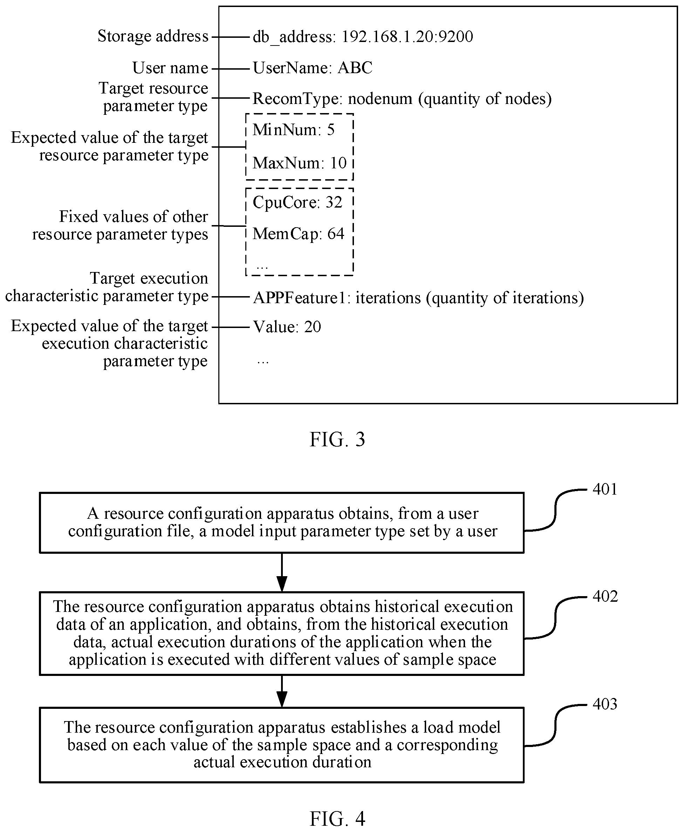

For example, if the user expects to predict execution durations of an application with different values of the quantity of nodes and the quantity of iterations, the user may set the target resource parameter type as the quantity of nodes in the user configuration file, and set the target execution characteristic parameter type as the quantity of iterations. In addition, the user may fill in an expected value of the quantity of nodes as 5 to 10, and fill in an expected value of the quantity of iterations as 20. A filled user configuration file may be shown in FIG. 3. In the user configuration file, an expected value of each parameter type may be filled as a value range, or be filled as one or more discrete values.

It should be noted that, the expected value of each parameter type is temporarily not used in the modeling process and is used in a subsequent processing process of prediction of an application execution duration.

In addition to the foregoing content that needs to be filled in, the configuration file may further include some other content that needs to be filled in or content that is directly displayed. For example, a filling item of a storage address is set in the user configuration file. The storage address may be used for storing an established load model, may be further used for storing the application execution duration predicted by the model, and may be further used for storing recommended resource configuration information. For another example, in a case in which the user sets the target resource parameter type as the quantity of nodes, a default node attribute, for example, a specific value of a quantity of CPU cores, a memory capacity, a bandwidth, a disk capacity, or the like is directly displayed in the user configuration file, or the user may fill in a quantity of CPU cores, a memory capacity, a bandwidth, a disk capacity, or the like that is selected (where in this case, the quantity of CPU cores, the memory capacity, the bandwidth, the disk capacity, or the like is fixed in the processing process of an entire solution). For another example, a filling item of a user name is set in the user configuration file, and the user name may be used for distinguishing user configuration files filled by different users.

After filling in and saving the user configuration file, the user may operate in the client program to trigger modeling. There may be various corresponding operation manners. For example, a modeling control is set in a client interface. The user may trigger the modeling by clicking the modeling control, or trigger the modeling through an instruction interface such as a restful (which is a name of an interface type) interface. Correspondingly, an instruction input window is set in the client interface. The user may enter instructions in a character string form in the instruction input window, to trigger the modeling. After the user performs an operation of triggering the modeling, the client program obtains the user configuration file, and sends the user configuration file to the resource configuration apparatus. The apparatus may obtain, from the user configuration file, the model input parameter type set by the user and other information.

Optionally, in addition to the foregoing manner in which the user configuration file is used, parameter configuration may alternatively be performed in a manner in which a client interaction interface is used, and so on.

202: The resource configuration apparatus notifies a computing cluster of executing the application, and obtains, from the computing cluster, actual execution durations of the application executed with different values of sample space.

The computing cluster is a computing cluster, for example, a specific data center, in which the user is about to rent the device resource. The different values of the sample space are combinations of different values of the target execution characteristic parameter type of the application and different values of the target resource parameter type. For example, if different values of the quantity of nodes (the target resource parameter type) include 3, 4, 5, and 6, and values of the quantity of iterations (the target execution characteristic parameter type) include 10 and 20, the values of the sample space may include the following combinations: (3,10), (4,10), (5,10), (6,10), (3,20), (4,20), (5,20), and (6,20).

After obtaining the user configuration file, the resource configuration apparatus may send a trial running notification to the computing cluster, to indicate the computing cluster to perform application trial running. The trial running notification may carry the different values of the sample space. Subsequently, the terminal may normally send an application execution request to the computing cluster. Each time after receiving the application execution request sent by the terminal, the computing cluster may select one value of the sample space based on a specific mechanism (for example, randomization or polling), process the current application execution request based on the value of the sample space, and record an actual execution duration. Then, the computing cluster sends the currently selected value of the sample space and the corresponding actual execution duration to the resource configuration apparatus. The apparatus correspondingly stores the value of the sample space and the actual execution duration that are received.

After the trial running is performed for a period of time or after the trial running reaches a specific quantity of execution times, the resource configuration apparatus may summarize data received and stored during the trial running, and prepare to perform model training.

Optionally, when the different values of the sample space and the corresponding actual execution duration are obtained, a specific obtaining principle may be set to ensure that training data can be distributed evenly. The principle may be: The sample space includes a plurality of sample subspaces with an equal quantity of values, and actual execution durations corresponding to the values in each sample subspace belong to a same unit duration interval.

To implement the foregoing principle, the following sample standardization processing may be performed to ensure even sample distribution. A possible processing manner may be as follows.

### Manner 1

The resource configuration apparatus presets a plurality of unit duration intervals, where the plurality of unit duration intervals are a plurality of duration intervals that have an equal duration and that are adjacently distributed within a specified duration range. For example, within a duration range from 5 minutes to 60 minutes, every 20 seconds is a unit duration interval.

In a process of receiving and storing the value of the sample space and the corresponding actual execution duration that are sent by the computing cluster, the resource configuration apparatus determines a unit duration interval to which the actual execution duration belongs, and collects statistics on a quantity of actual execution durations in each unit duration interval. When a quantity of actual execution durations in any unit duration interval reaches a preset quantity threshold, an actual execution duration in the unit duration interval and a corresponding value of the sample space are no longer stored subsequently. When quantities of actual execution durations in all unit duration intervals each reach the preset quantity threshold, the computing cluster may be indicated to stop the trial running. The preset quantity threshold may be set based on experience.

### Manner 2

The resource configuration apparatus presets a plurality of unit duration intervals, where the plurality of unit duration intervals are a plurality of duration intervals that have an equal duration and that are adjacently distributed within a specified duration range.

After the trial running ends, the resource configuration apparatus summarizes all actual execution durations and corresponding values of the sample space. If a quantity of actual execution durations reaches a specified order of magnitude, it may be considered that a quantity of samples is very sufficient, and there is no deviation in the model training. In this case, subsequent training modeling processing may be directly performed. If the quantity of actual execution durations does not reach the specified order of magnitude, it may be considered that the quantity of samples is insufficient. In this case, evenness of sample distribution has great impact on accuracy of the model. In this case, the resource configuration apparatus may obtain a same quantity of actual execution durations in each unit duration interval, and obtain corresponding values of the sample space for the subsequent training modeling processing.

According to the foregoing sample standardization processing, inaccurate model training caused by uneven sample distribution can be prevented, and the accuracy of the model can be improved.

203: The resource configuration apparatus establishes the load model based on each value of the sample space and a corresponding actual execution duration.

The load model is a machine learning model, and may be a regression model, a deep learning network model, or the like.

The resource configuration apparatus may train a pre-stored initial model based on each value of the sample space and the corresponding actual execution duration that are stored during the trial running, to obtain a trained load model. Subsequently, the load model is sent to the storage address specified by the user for storage. The storage address may be an address of a specified device of the user, or may be an address of specific storage space rented by the user. Certainly, the resource configuration apparatus may alternatively locally store the load model, or send the load model to the terminal.

Optionally, when a standard deviation of obtained actual execution durations is greater than a standard deviation threshold, a duration logarithm corresponding to each actual execution duration is determined. The load model is established based on each value of the sample space and the corresponding duration logarithm. To be specific, the duration logarithm is used as output of the load model. In this way, a numerical span of model output can be effectively reduced, model processing complexity can be reduced, and model processing efficiency can be improved.

In the foregoing procedure, model training data is obtained in a trial running manner. As shown in FIG. 4, in a modeling processing procedure, the model training data is obtained from historical execution data of an application, and the modeling processing procedure may include the following steps. The corresponding modeling processing is performed by the resource configuration apparatus in FIG. 1.

401: The resource configuration apparatus obtains, from a user configuration file, a model input parameter type set by a user.

For corresponding processing, refer to the related description content in step 201.

402: The resource configuration apparatus obtains the historical execution data of the application, and obtains, from the historical execution data, actual execution durations of the application when the application is executed with different values of sample space.

The user may upload the historical execution data of the application to the resource configuration apparatus through a terminal. The historical execution data is recorded in a historical execution process of the application. The historical execution data includes at least a value corresponding to a target execution characteristic parameter type and a value corresponding to a target resource parameter type (that is, a value of the sample space) and an actual execution duration, each time the application is executed. In addition, the user may notify the resource configuration apparatus of field names of the data in the historical execution data through the terminal. For example, the user sends, to the resource configuration apparatus through the terminal, a field name A corresponding to a quantity of nodes, a field name B corresponding to a data scale, and a field name C corresponding to the actual execution duration. The apparatus may search the historical execution data of the application for data of a corresponding field based on these field names, to obtain the actual execution durations of the application when the application is executed with the different values of the sample space.

Optionally, sample standardization processing similar to that in the foregoing procedure may also be performed in the procedure, to enable the sample space to include a plurality of sample subspaces with an equal quantity of values, and actual execution durations corresponding to the values in each sample subspace belong to a same unit duration interval.

403: The resource configuration apparatus establishes the load model based on each value of the sample space and a corresponding actual execution duration.

For corresponding processing, refer to the related description content in step 203.

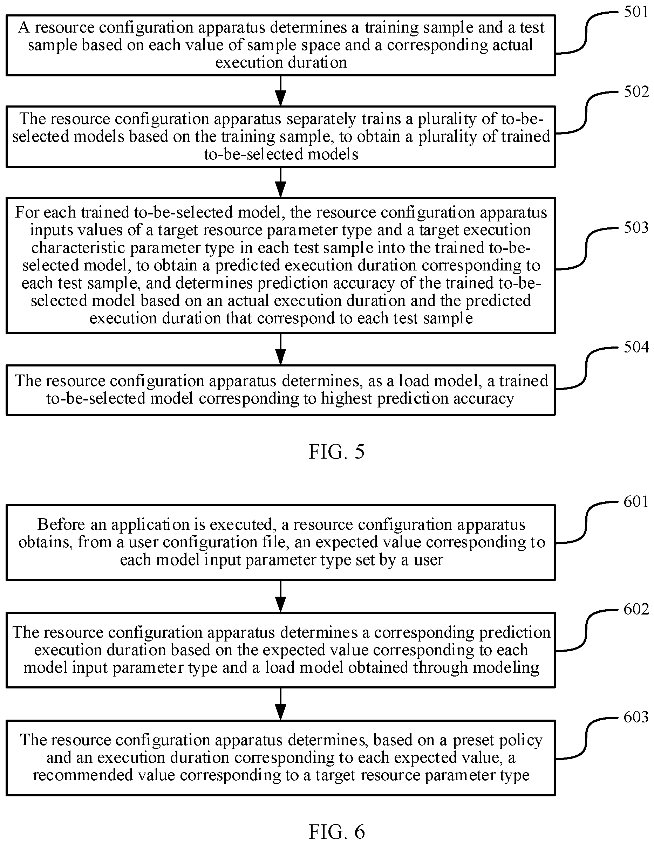

When the modeling processing in step 203 and step 403 is performed, initial models using a plurality of different algorithms may be separately trained, and then an optimal model is selected from a plurality of trained models as the load model. As shown in FIG. 5, corresponding modeling processing includes the following steps. The corresponding modeling processing is performed by the resource configuration apparatus in FIG. 1.

501: The resource configuration apparatus determines a training sample and a test sample based on each value of sample space and a corresponding actual execution duration.

A value of the sample space and a corresponding actual execution duration may be referred to as a group of sample data. The resource configuration apparatus may set some sample data as the training sample, and set some sample data as the test sample.

502: The resource configuration apparatus separately trains a plurality of to-be-selected models based on the training sample, to obtain a plurality of trained to-be-selected models.

The plurality of to-be-selected models are machine learning models using different algorithms. The corresponding algorithms may be different types of regression algorithms, such as a linear regression algorithm, an extreme gradient boosting (extreme gradient boosting, xgboost) algorithm, a light gradient boosting machine (light gradient boosting machine, lgbm) algorithm, and a support vector regression algorithm. Certainly, the corresponding algorithms may also include different types of deep learning algorithms.

503: For each trained to-be-selected model, the resource configuration apparatus inputs values of a target resource parameter type and a target execution characteristic parameter type in each test sample into the trained to-be-selected model, to obtain a predicted execution duration corresponding to each test sample, and determines prediction accuracy of the trained to-be-selected model based on an actual execution duration and the predicted execution duration that correspond to each test sample.

Processing of determining the prediction accuracy based on the actual execution duration and the predicted execution duration may be as follows.

For each test sample, an absolute value of a difference between the predicted execution duration and the actual execution duration that correspond to the test sample is calculated, and then a ratio of the absolute value of the difference to the actual execution duration is calculated. If the ratio is greater than a ratio threshold, it is determined that a test result of the corresponding test sample is inaccurate. If the ratio is greater than the ratio threshold, it is determined that the test result of the corresponding test sample is accurate. A proportion of test samples with an accurate test result to all test samples is further calculated, and is used as the prediction accuracy of the trained to-be-selected model.

Based on such a calculation method, prediction accuracy of each trained to-be-selected model can be calculated.

504: The resource configuration apparatus determines, as the load model, a trained to-be-selected model corresponding to highest prediction accuracy.

Optionally, in embodiments of this application, sample standardization processing may alternatively be performed when step 501 is performed. Correspondingly, processing in step 501 may be as follows.

When a quantity of obtained actual execution durations is less than a quantity threshold, a first quantity of actual execution durations in each unit duration interval is obtained. Each actual execution duration and a corresponding value of the sample space that are obtained are determined as the training sample. A second quantity of actual execution durations in each unit duration interval is obtained. Each actual execution duration and a corresponding value of the sample space are determined as the test sample.

There is no same actual execution duration in the first quantity of actual execution durations in each unit duration interval and the second quantity of actual execution durations in each unit duration interval. A plurality of unit duration intervals are a plurality of duration intervals that have an equal duration and that are adjacently distributed within a specified duration range. The first quantity and the second quantity may be set based on experience and stored in advance. A total quantity of training samples and a total quantity of test samples may be first set. Subsequently, the first quantity and the second quantity are respectively obtained by dividing the total quantity of training samples and the total quantity of test samples by a quantity of unit duration intervals.

### Description of a processing process of running time period prediction and a processing process of resource configuration solution recommendation:

An embodiment of this application provides a processing procedure of running time period prediction of an application and a processing procedure of resource configuration solution recommendation, which may be shown in FIG. 6 and include the following steps. The corresponding processing is performed by the resource configuration apparatus in FIG. 1.

601: Before the application is executed, the resource configuration apparatus obtains, from a user configuration file, an expected value corresponding to each model input parameter type set by a user.

Model input parameter types include a target resource parameter type and a target execution characteristic parameter type.

For a configuration and uploading processing that are of the user configuration file, refer to the related description content in step 201. After modeling is completed, the resource configuration apparatus may automatically start to predict an execution duration of the application. Alternatively, after the modeling is completed, the resource configuration apparatus may notify a terminal, and the terminal displays prompt information indicating that the modeling is completed. In this case, the user may operate a client program to send an execution duration prediction request to the resource configuration apparatus, to trigger the resource configuration apparatus to predict the execution duration of the application.

When starting to perform prediction, the resource configuration apparatus first obtains, from the user configuration file, the expected value corresponding to each model input parameter type set by the user.

602: The resource configuration apparatus determines a corresponding predicted execution duration based on the expected value corresponding to each model input parameter type and a load model obtained through the modeling. The load model may be obtained through the modeling processing shown in FIG. 2, FIG. 4, or FIG. 5.

### Case 1

The user may set the corresponding expected value for each model input parameter type in advance, and fill the expected value in the user configuration file. One or more expected values may be set for each model input parameter type. For example, the model input parameter types include a quantity of nodes and a quantity of iterations. An expected value of the quantity of nodes includes a plurality of values, which are respectively 3, 4, 5, 6, 7, and 8. An expected value of the quantity of iterations is a value of 10.

The resource configuration apparatus may select an expected value for each model input parameter type, and perform combination to obtain an expected value combination, and therefore, obtain all possible expected value combinations. The resource configuration apparatus uses each expected value combination as one-time input data of the load model, and inputs the data into the load model, to obtain a corresponding predicted execution duration.

### Case 2

The user may preset one or more expected value combinations, and fill the one or more expected value combinations in the user configuration file. Any expected value combination includes one expected value corresponding to each model input parameter type.

The resource configuration apparatus may use each expected value combination as one-time input data of the load model, and input the data into the load model, to obtain a corresponding predicted execution duration.

In any of the foregoing cases, after determining the predicted execution duration, the resource configuration apparatus may notify the terminal that the prediction is completed, and send the predicted execution duration to a storage address specified by the user for storage. The terminal may obtain the predicted execution duration stored in the storage address and display the predicted execution duration. Alternatively, the resource configuration apparatus may directly send the predicted execution duration to the terminal for display.

It should be noted that, if a duration logarithm is used during the foregoing modeling, after the expected value is input into the load model, the duration logarithm is directly output. A corresponding exponential operation may be performed based on the duration logarithm, to obtain the corresponding predicted execution duration.

After step 602 is performed, optionally, the resource configuration apparatus may further help recommend, to the user based on the predicted execution duration, a resource configuration solution that meets a specific requirement of the user. Corresponding processing may be as follows.

603: The resource configuration apparatus determines, based on a preset policy and an execution duration corresponding to each expected value, a recommended value corresponding to the target resource parameter type.

After determining the recommended value, the resource configuration apparatus may obtain a value corresponding to a resource parameter type other than the target resource parameter type. As mentioned in the foregoing content, the value is a fixed value, and may be a default value or a user-defined value. The resource configuration apparatus determines, as a computing node configuration solution, the recommended value corresponding to the target resource parameter type and the value corresponding to another resource parameter type. For example, in the computing node configuration solution, the target resource parameter type is a quantity of nodes, and the corresponding recommended value is 10. Other resource parameter types include a quantity of CPU cores, a memory capacity, a bandwidth, and a disk capacity that are of the node, and corresponding values are respectively 32, 64 gigabytes (gigabytes, GBs), and 500 mbytes (mbytes, MBs)/second (s).

Further, the resource configuration apparatus may send the computing node configuration solution to a computing cluster, to enable the computing cluster to allocate a resource to the corresponding application based on the computing node configuration solution. Alternatively, the resource configuration apparatus may send the computing node configuration solution to a storage location specified by the user. The user may access the storage location through the terminal to obtain the recommended value, and the computing node configuration solution is displayed. Alternatively, the resource configuration apparatus may directly send the computing node configuration solution to the terminal for display.

A purpose of setting the target resource parameter type by the user is to determine an optimal value corresponding to the parameter type. For example, if the user sets the quantity of nodes as the target resource parameter type, the user is intended to determine an optimal value of the quantity of nodes. The optimal value may be used for different purposes, for example, a shortest duration, a lowest cost, or highest cost-effectiveness. Different purposes correspond to different policies for determining the recommended value. Therefore, the foregoing preset policy has a plurality of possibilities. The following provides several different policies for determining the recommended value.

### Policy 1 (where an execution duration is shortest)

Predicted execution durations of the application with different expected values of the target resource parameter type are obtained, and an expected value corresponding to a shortest predicted execution duration is determined as the recommended value corresponding to the target resource parameter type. If there are a plurality of expected values corresponding to the shortest predicted execution duration, an expected value corresponding to a lowest cost price is selected from the plurality of expected values as the recommended value. In this case, it indicates that after a quantity of resources is increased to a specific value, a processing speed of the application cannot be improved by continuing to increase the quantity of resources.

For example, expected values of the quantity of nodes (the target resource parameter type) include 3, 4, 5, 6, 7, and 8. Predicted execution durations respectively corresponding to the expected values are obtained, and an expected value corresponding to a shortest predicted execution duration is determined. In one case, if the expected value corresponding to the shortest predicted execution duration is only 8, a recommended value of the quantity of nodes is 8. In another case, if there are a plurality of expected values, which are respectively 6, 7, and 8, corresponding to the shortest predicted execution duration, cost prices are further determined, where a cost price corresponding to 6 is the lowest. Therefore, it may be determined that the recommended value of the quantity of nodes is 6.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner.

For example, the expected values of the quantity of nodes (the target resource parameter type) include 3, 4, 5, 6, 7, and 8, and expected valued of the quantity of iterations (the target execution characteristic parameter type) include 10 and 20. For expected value combinations: (10, 3), (10, 4), (10, 5), (10, 6), (10, 7), and (10, 8) that are of the quantity of iterations and the quantity of nodes, predicted execution durations respectively corresponding to the expected value combinations are obtained. It is determined that expected value combinations corresponding to the shortest predicted execution duration are (10, 6), (10, 7), and (10, 8), where a cost corresponding to (10, 6) is the shortest. Therefore, it may be determined that, when the quantity of iterations is 10, the recommended value of the quantity of nodes is 6. In addition, for expected value combinations: (20, 3), (20, 4), (20, 5), (20, 6), (20, 7), and (20, 8) that are of the quantity of iterations and the quantity of nodes, predicted execution durations respectively corresponding to the expected value combinations are obtained. It is determined that expected value combinations corresponding to the shortest predicted execution duration are (20, 7) and (20, 8), where a cost corresponding to (20, 7) is the lowest. Therefore, it may be determined that, when the quantity of iterations is 20, the recommended value of the quantity of nodes is 7.

### Policy 2 (where a cost is lowest on the premise that a duration requirement is met)

Predicted execution durations of the application with different expected values of the target resource parameter type are obtained, and an expected value corresponding to a lowest cost price is selected, from expected values corresponding to predicted execution durations each less than a duration threshold, as the recommended value corresponding to the target resource parameter type. The duration threshold may be set based on experience.

For example, expected values of the quantity of nodes include 3, 4, 5, 6, 7, and 8. Predicted execution durations respectively corresponding to the expected values are obtained. Then, it is determined that expected values corresponding to predicted execution durations each greater than the duration threshold include 5, 6, 7, and 8, where an expected value corresponding to a lowest cost price is 5. Therefore, it may be determined that the recommended value of the quantity of nodes is 5.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner. A specific example is similar to the foregoing example, and is not described herein again.

### Policy 3 (where an execution duration is shortest on the premise that a cost requirement is met)

Cost prices and predicted execution durations that correspond to different expected values of the target resource parameter type are obtained, and expected values corresponding to cost prices each less than a price threshold are selected from predicted values. Then, an expected value corresponding to the shortest predicted execution duration is further selected from the selected expected values as the recommended value corresponding to the target resource parameter type.

For example, expected values of the quantity of nodes include 3, 4, 5, 6, 7, and 8. Predicted execution durations and cost prices that respectively correspond to the expected values are obtained. Then, it is determined that the expected values with the cost prices less than the price threshold include 3, 4, 5, and 6. Further, in 3, 4, 5, and 6, it is determined that the expected value corresponding to the shortest predicted execution duration is 6. Therefore, it may be determined that the recommended value of the quantity of nodes is 6.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner. A specific example is similar to the foregoing example, and is not described herein again.

### Policy 4 (where cost-effectiveness is highest)

A product of a cost price and a predicted execution duration that correspond to each of different expected values of the target resource parameter type is determined, and an expected value corresponding to a minimum product is determined as the recommended value corresponding to the target resource parameter type.

For example, expected values of the quantity of nodes include 3, 4, 5, 6, 7, and 8. Predicted execution durations and cost prices that respectively correspond to the expected values are obtained. Then, a product of a predicted execution duration and a cost is calculated, and it is determined that the expected value corresponding to the minimum product is 5. Therefore, it may be determined that the recommended value of the quantity of nodes is 5.

The foregoing descriptions use a case in which the target execution characteristic parameter type has only one expected value as an example. It should be noted that, if the user sets a plurality of expected values for the target execution characteristic parameter type, for each expected value, the recommended value corresponding to the target resource parameter type may be determined according to the foregoing processing manner. A specific example is similar to the foregoing example, and is not described herein again.

In embodiments of this application, a load model that uses a configuration of a computing node and an execution characteristic parameter of an application as input parameters is established, so that an execution duration of the application is predicted based on the load model, and therefore, a resource configuration is determined based on the predicted execution duration. The execution duration of the application can be accurately predicted based on a machine learning model, and the resource configuration is performed based on the execution duration, so that accuracy of the resource configuration can be improved.

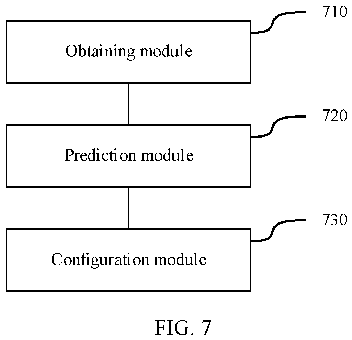

Based on a same technical concept, an embodiment of this application further provides a resource configuration apparatus. As shown in FIG. 7, the apparatus includes:
an obtaining module 710, configured to obtain an execution characteristic parameter of an application, where specifically, the obtaining function in step 601 and another implicit step can be implemented;
a prediction module 720, configured to obtain, based on the execution characteristic parameter of the application and a load model, running time periods of the application when the application runs on different computing nodes, where the different computing nodes have different configurations, and specifically, the function of predicting the execution duration in step 602 and another implicit step can be implemented; and
a configuration module 730, configured to determine, according to a preset policy, a configuration of a computing node that executes the application, where specifically, the determining function in step 603 and another implicit step can be implemented.

In a possible implementation, the apparatus further includes an establishment module, configured to: obtain a configuration of a sample computing node and an execution characteristic parameter of a sample application; obtain actual running time periods of the sample application executed with different values of sample space, where the sample space is combinations of different values of the execution characteristic parameter of the sample application and different values of the configuration of the sample computing node; and establish the load model based on each value of the sample space and a corresponding actual execution duration. Specifically, related processing in the foregoing modeling process can be implemented.

In a possible implementation, the establishment module is configured to: the sample space includes a plurality of sample subspaces with an equal quantity of values, and actual execution durations corresponding to the values in each sample subspace belong to a same unit duration interval; and establish the load model based on each value of all the sample subspaces and the corresponding actual execution duration.

In a possible implementation, the establishment module is configured to: determine, when a standard deviation of the obtained actual execution durations is greater than a standard deviation threshold, a duration logarithm corresponding to each actual execution duration; and establish the load model based on each value of the sample space and the corresponding duration logarithm.

In a possible implementation, the execution characteristic parameter of the sample application includes at least one of a data scale, a quantity of iterations, and a degree of parallelism.

In a possible implementation, the computing module is configured to: use, as the configuration of the computing node that executes the application, a configuration of a computing node with a shortest running time period in the running time periods of the application when the application runs on the different computing nodes.

In a possible implementation, the computing module is configured to: obtain a set of configurations of computing nodes with a running time period less than a first duration threshold in the running time periods of the application when the application runs on the different computing nodes; obtain a cost price of a configuration of each computing node in the set; and use a configuration of a computing node with a lowest cost price in the set as the configuration of the computing node that executes the application.

In a possible implementation, the computing module is configured to: obtain cost prices of configurations of the different computing nodes; and use, as the configuration of the computing node that executes the application, a configuration of a computing node with a cost price less than a first price and with a shortest running time period in the running time periods of the application when the application runs on the different computing nodes.

In a possible implementation, the configuration of the computing node includes at least one of a quantity of nodes, a quantity of CPU cores of the node, a memory of the node, a bandwidth of the node, and a disk capacity.

In a possible implementation, the computing cluster includes at least one device, and the computing node is one device.

In a possible implementation, the computing cluster includes at least one device, at least one virtual machine runs on each device, and the computing node is one virtual machine.

It should be noted that, the obtaining module 710, the prediction module 720, the configuration module 730, and the establishment module may be implemented by a processor, or may be implemented by the processor in cooperation with a memory and a communication component.

In embodiments of this application, a load model that uses a configuration of a computing node and an execution characteristic parameter of an application as input parameters is established, so that an execution duration of the application is predicted based on the load model, and therefore, a resource configuration is determined based on the predicted execution duration. The execution duration of the application can be accurately predicted based on a machine learning model, and the resource configuration is performed based on the execution duration, so that accuracy of the resource configuration can be improved.

It should be noted that, when the resource configuration apparatus provided in the foregoing embodiments performs resource configuration processing, division of the foregoing functional modules is merely used as an example for description. During actual application, the foregoing functions may be allocated to different functional modules for implementation based on a requirement, to be specific, an internal structure of the apparatus is divided into the different functional modules, to complete a part or all of the functions described above. In addition, the resource configuration apparatus provided in the foregoing embodiments and the embodiments illustrating the resource configuration method pertain to a same concept. For a specific implementation process, refer to the method embodiments. Details are not described herein again.

A part or all of the foregoing embodiments may be implemented using software, hardware, firmware, or any combination thereof. When the software is used for implementation, the part or all of the foregoing embodiments may be implemented in a form of a computer program product. The computer program product includes one or more computer instructions. When the computer program instructions are loaded and executed on a device, the procedures or functions according to embodiments of this application are all or partially generated. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (for example, a floppy disk, a hard disk drive, or a magnetic tape), an optical medium (for example, a digital video disk (digital video disk, DVD)), or a semiconductor medium (for example, a solid-state drive).

A person of ordinary skill in the art may withstand that a part or all of the steps of the foregoing embodiments may be implemented using hardware or a program instructing related hardware. The program may be stored in a computer-readable storage medium. The storage medium mentioned above may be a read-only memory, a magnetic disk, an optical disc, or the like.

The foregoing description is merely an embodiment of this application, but is not intended to limit this application. Any modification, equivalent replacement, or improvement made without departing from the principle of this application shall fall within the protection scope of this application.

## Claims

1. A resource configuration method, wherein the method is applied to a computing cluster, the computing cluster comprises a plurality of computing nodes, and the method comprises:
obtaining an execution characteristic parameter of an application;
obtaining, based on the execution characteristic parameter of the application and a load model, running time periods of the application when the application runs on different computing nodes, wherein the different computing nodes have different configurations; and
determining, according to a preset policy, a configuration of a computing node that executes the application.

2. The method according to claim 1, wherein before the obtaining running time periods of the application when the application runs on different computing nodes, the method comprises:
obtaining a configuration of a sample computing node and an execution characteristic parameter of a sample application;
obtaining actual running time periods of the sample application executed with different values of sample space, wherein the sample space is combinations of different values of the execution characteristic parameter of the sample application and different values of the configuration of the sample computing node; and
establishing the load model based on each value of the sample space and a corresponding actual execution duration.

3. The method according to claim 2, wherein the establishing the load model based on each value of the sample space and a corresponding actual execution duration comprises:
the sample space comprises a plurality of sample subspaces with an equal quantity of values, and actual execution durations corresponding to the values in each sample subspace belong to a same unit duration interval; and
establishing the load model based on each value of all the sample subspaces and the corresponding actual execution duration.

4. The method according to claim 2 or 3, wherein the establishing the load model based on each value of the sample space and a corresponding actual execution duration comprises:
determining, when a standard deviation of the obtained actual execution durations is greater than a standard deviation threshold, a duration logarithm corresponding to each actual execution duration; and
establishing the load model based on each value of the sample space and the corresponding duration logarithm.

5. The method according to any one of claims 2 to 4, wherein the execution characteristic parameter of the sample application comprises at least one of a data scale, a quantity of iterations, and a degree of parallelism.

6. The method according to any one of claims 1 to 5, wherein the determining, according to a preset policy, a configuration of a computing node that executes the application comprises:
using, as the configuration of the computing node that executes the application, a configuration of a computing node with a shortest running time period in the running time periods of the application when the application runs on the different computing nodes.

7. The method according to any one of claims 1 to 5, wherein the determining, according to a preset policy, a configuration of a computing node that executes the application comprises:
obtaining a set of configurations of computing nodes with a running time period less than a first duration threshold in the running time periods of the application when the application runs on the different computing nodes;
obtaining a cost price of a configuration of each computing node in the set; and
using a configuration of a computing node with a lowest cost price in the set as the configuration of the computing node that executes the application.

8. The method according to any one of claims 1 to 5, wherein the determining, according to a preset policy, a configuration of a computing node that executes the application comprises:
obtaining cost prices of configurations of the different computing nodes; and
using, as the configuration of the computing node that executes the application, a configuration of a computing node with a cost price less than a first price and with a shortest running time period in the running time periods of the application when the application runs on the different computing nodes.

9. The method according to any one of claims 1 to 8, wherein the configuration of the computing node comprises at least one of a quantity of nodes, a quantity of CPU cores of the node, a memory of the node, a bandwidth of the node, and a disk capacity of the node.

10. The method according to any one of claims 1 to 9, wherein the computing cluster comprises at least one device, and the computing node is one device.

11. The method according to any one of claims 1 to 9, wherein the computing cluster comprises at least one device, at least one virtual machine runs on each device, and the computing node is one virtual machine.

12. A resource configuration apparatus, wherein the apparatus comprises:
an obtaining module, configured to obtain an execution characteristic parameter of an application;
a prediction module, configured to obtain, based on the execution characteristic parameter of the application and a load model, running time periods of the application when the application runs on different computing nodes in a computing cluster, wherein the different computing nodes have different configurations; and
a configuration module, configured to determine, according to a preset policy, a configuration of a computing node that executes the application.

13. The apparatus according to claim 12, wherein the apparatus further comprises an establishment module, configured to:
obtain a configuration of a sample computing node and an execution characteristic parameter of a sample application;
obtain actual running time periods of the sample application executed with different values of sample space, wherein the sample space is combinations of different values of the execution characteristic parameter of the sample application and different values of the configuration of the sample computing node; and
establish the load model based on each value of the sample space and a corresponding actual execution duration.

14. The apparatus according to claim 13, wherein the establishment module is configured to:
the sample space comprises a plurality of sample subspaces with an equal quantity of values, and actual execution durations corresponding to the values in each sample subspace belong to a same unit duration interval; and
establish the load model based on each value of all the sample subspaces and the corresponding actual execution duration.

15. The apparatus according to claim 13 or 14, wherein the establishment module is configured to:
determine, when a standard deviation of the obtained actual execution durations is greater than a standard deviation threshold, a duration logarithm corresponding to each actual execution duration; and
establish the load model based on each value of the sample space and the corresponding duration logarithm.

16. The apparatus according to any one of claims 13 to 15, wherein the execution characteristic parameter of the sample application comprises at least one of a data scale, a quantity of iterations, and a degree of parallelism.

17. The apparatus according to any one of claims 12 to 16, wherein the configuration module is configured to:
use, as the configuration of the computing node that executes the application, a configuration of a computing node with a shortest running time period in the running time periods of the application when the application runs on the different computing nodes.

18. The apparatus according to any one of claims 12 to 16, wherein the configuration module is configured to:
obtain a set of configurations of computing nodes with a running time period less than a first duration threshold in the running time periods of the application when the application runs on the different computing nodes;
obtain a cost price of a configuration of each computing node in the set; and
use a configuration of a computing node with a lowest cost price in the set as the configuration of the computing node that executes the application.

19. The apparatus according to any one of claims 12 to 16, wherein the configuration module is configured to:
obtain cost prices of configurations of the different computing nodes; and
use, as the configuration of the computing node that executes the application, a configuration of a computing node with a cost price less than a first price and with a shortest running time period in the running time periods of the application when the application runs on the different computing nodes.

20. The apparatus according to any one of claims 12 to 19, wherein the configuration of the computing node comprises at least one of a quantity of nodes, a quantity of CPU cores of the node, a memory of the node, a bandwidth of the node, and a disk capacity of the node.

21. The apparatus according to any one of claims 12 to 20, wherein the computing cluster comprises at least one device, and the computing node is one device.

22. The apparatus according to any one of claims 12 to 20, wherein the computing cluster comprises at least one device, at least one virtual machine runs on each device, and the computing node is one virtual machine.

23. A computer device, wherein the computer device comprises a memory and a processor, and the memory is configured to store computer instructions; and
the processor executes the computer instructions stored in the memory, to enable the computer device to perform the method according to any one of claims 1 to 11.

24. A computer-readable storage medium, wherein the computer-readable storage medium stores computer program code; and when the computer program code is executed by a computer device, the computer device performs the method according to any one of claims 1 to 11.

25. A computing system, wherein the computing system comprises a plurality of computing nodes and a resource configuration apparatus, wherein the plurality of computing nodes have different configurations, and the resource configuration apparatus is configured to perform the method according to any one of claims 1 to 11.
